# EUROPEAN PATENT APPLICATION

(11) **EP 4 836 378 A1**
(43) Date of publication of application: **04.11.2026**
(21) Application number: 26174159.9
(22) Date of filing: 23.04.2026
(51) Int. Cl.: H04L 67/06, H04L 9/40

(54) **FILE SHARING APPARATUS AND DATA SHARING METHOD**

(30) Priority: 28.04.2025 JP 2025074784
(71) Applicant: Sharp Kabushiki Kaisha, Sakai City, Osaka 590-8522 (JP)
(72) Inventor: WATABE, Tatsuya, Osaka, 590-8522 (JP)
(74) Representative: Müller Hoffmann & Partner

(57) **Abstract**

A file sharing apparatus includes a communicator that communicates with a client and one or more controllers. The one or more controllers provide a file sharing service to the client, and are capable of setting a version of a protocol used in the file sharing service, an authentication method in the communication, and an encrypted communication setting. When the version of the protocol is set, the one or more controllers switch settings to the authentication method and the encrypted communication setting that are available in the set version.

## Description

### BACKGROUND OF THE INVENTION

### Field of the Invention

The present disclosure relates to a file sharing apparatus and the like.

### Description of the Background Art

For example, as a file sharing protocol, a technique using Server Message Block (SMB) is known in Japanese Unexamined Patent Application Publication No. 2020-053767. This publication discloses that three versions of SMB, from SMB 1.0 to SMB 3.0, are available.

One object of the present disclosure is to provide a file sharing apparatus and the like capable of setting an appropriate method in setting of a sharing service, for example.

### SUMMARY OF THE INVENTION

A file sharing apparatus includes a communicator that communicates with a client, and one or more controllers. The one or more controllers provide a file sharing service to the client, and are capable of setting a version of a protocol used in the file sharing service, an authentication method in the communication, and an encrypted communication setting. When the version of the protocol is set, the one or more controllers switch settings to the authentication method and the encrypted communication setting that are available in the set version.

A data sharing method performs communication between an image forming apparatus and a terminal device, and shares data using a file sharing protocol. The method is capable of setting a version of the file sharing protocol, an authentication method used in the communication, and an encrypted communication setting of the communication. When the version of the file sharing protocol is set, the authentication method and the encrypted communication setting available in the set version are switched.

According to the present disclosure, for example, it is possible to provide a file sharing apparatus and the like capable of setting an appropriate method in setting of a sharing service.

### BRIEF DESCRIPTION OF THE DRAWINGS

FIG. 1 is a diagram for explaining an overview of a system in a first embodiment.
FIG. 2 is a diagram for explaining a hardware configuration of an image forming apparatus in the first embodiment.
FIG. 3 is a diagram for explaining a hardware configuration of a terminal device in the first embodiment.
FIG. 4 is a diagram for explaining a software configuration of the image forming apparatus in the first embodiment.
FIG. 5 is a diagram for explaining an example of system settings in the first embodiment.
FIG. 6 is a diagram for explaining an operation of a setting determiner in the first embodiment.
FIG. 7 is a diagram for explaining the operation of the setting determiner in the first embodiment.
FIG. 8 is a flowchart for explaining a processing operation in the first embodiment.
FIG. 9 is a diagram showing an example of a system setting screen in the first embodiment.
FIG. 10 is a diagram for explaining state transitions in the first embodiment.
FIG. 11 is a diagram showing an example of a system setting screen in the first embodiment.
FIG. 12 is a diagram showing an example of a system setting screen in the first embodiment.

### DESCRIPTION OF THE PREFERRED EMBODIMENTS

Various services for sharing files and the like using a network are known in an information processing apparatus, a server apparatus, and a file sharing apparatus. For example, Server Message Block (SMB) is known as one protocol that provides a file sharing service.

Here, three typical versions of SMB are known. SMB 1.0 (hereinafter, "SMBv1"), which is version "1.0," is a version in which only basic authentication is available and an encryption method can be used in a limited manner. "SMB 2.0" ("SMB 2.0.0," "SMB 2.0.2") or "SMB 2.1" (hereinafter, "SMBv2") is more powerful than SMBv1 in that strong authentication methods are available and AES encryption and the like are supported. Version 3.0 or higher, such as "SMB 3.0," "SMB 3.0.2," or "SMB 3.1.1" (hereinafter, "SMBv3"), is a method in which encryption is standard equipment, and security is enhanced compared to SMBv2.

When a file sharing service is used, setting is performed to determine which of SMBv1, SMBv2, and SMBv3 is used on a file sharing apparatus side (server side) and a terminal device side (client side) connected to the file sharing apparatus. Further, it is necessary to set a server-client authentication method and encryption method in each apparatus.

However, since settings including available authentication methods and presence or absence of encryption differ depending on the version of the protocol (SMB) used in the file sharing service, a problem has occurred in which communication becomes impossible when an inappropriate combination is performed.

In addition, there has been a problem that administrators and general users do not know how to perform settings when they do not know an appropriate combination of the SMB version, the authentication method, and the encryption setting. In particular, there has been a problem that users do not know where a problem has occurred when communication becomes impossible after they have set the encryption setting and the authentication method.

Embodiments for implementing the present disclosure will be described below with reference to the drawings. The embodiments shown below are single embodiments providing the present disclosure, and the contents of the present disclosure are not to be interpreted as being limited based on the following description.

### 1. First Embodiment

### 1.1 Overall System

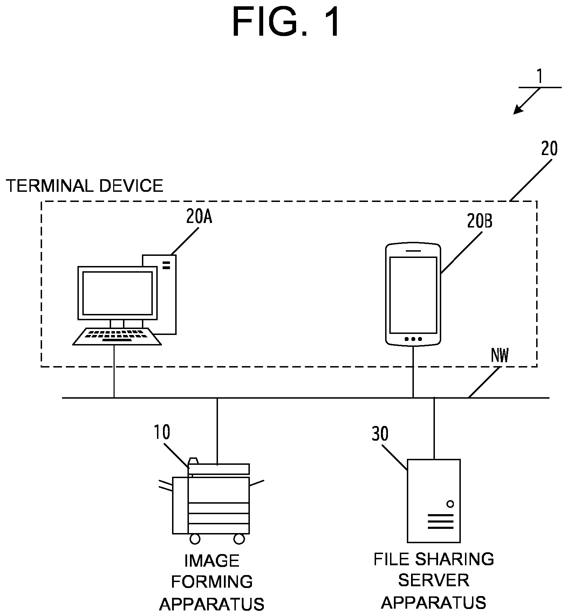

FIG. 1 is a diagram explaining an overview of a system 1. This is a diagram showing an outline of the system 1 including an image forming apparatus 10 as an example in which a file sharing apparatus is applied to the image forming apparatus 10.

In addition to the image forming apparatus 10, the system 1 may include one or more terminal devices 20 capable of communicating with the image forming apparatus 10 via a network NW. In FIG. 1, a terminal device 20A, which is a computer, and a terminal device 20B, which is a portable terminal device (for example, a smartphone, a tablet, or the like), are connected to the network NW. Hereinafter, when the terminal devices are simply referred to as terminal devices 20, they are described without particularly specifying the terminal devices 20A and 20B, and it is assumed that the description can be applied to any device.

The image forming apparatus 10 is, for example, a device called a multi-function machine or an MFP (Multifunction Peripheral/Printer/Product). For example, when the image forming apparatus 10 executes a job (print job), it can form an image on paper, which is a recording medium. The image forming apparatus 10 can execute jobs for a plurality of processes such as copy processing, FAX processing, scan processing, and print processing.

The terminal device 20 is another device relative to the image forming apparatus 10, and is a device used by a user such as a general user or an administrator. For example, a user transmits a print job including print data from the terminal device 20 to the image forming apparatus 10. The image forming apparatus 10 prints on recording paper based on, for example, the print data by executing the received print job. Further, an administrator can, for example, perform settings of the image forming apparatus 10 by accessing the image forming apparatus 10 from the terminal device 20. Hereinafter, a person who uses the devices included in the system 1 is referred to as a user, which includes general users, administrators, service engineers, and the like.

The image forming apparatus 10 and the terminal device 20 are examples, and the system 1 may include other configurations as necessary. For example, a NAS (Network Attached Storage) may be provided as the file sharing apparatus. Further, an information processing apparatus that simply provides a file sharing service may be applied as the file sharing apparatus. Services that can be provided by the image forming apparatus 10 and data may be provided by an external service (for example, a service provided on a cloud).

In FIG. 1, for example, a file sharing server apparatus 30 is connected to the network NW. The file sharing server apparatus 30 is an apparatus that provides an SMB server service.

The network NW connecting the image forming apparatus 10 and the terminal device 20 may be any communication line or communication system, and may use a communication system such as a wired or wireless LAN (Local Area Network), the Internet, a public line network, mobile communication (for example, mobile communication such as 4G/5G/6G), or a next-generation telephone network.

In the system 1 of FIG. 1, an example in which devices are connected to the same network NW will be described, but a configuration in which a plurality of networks are connected via the Internet may be used.

Further, the system 1 performs communication with the image forming apparatus 10 as a server side (server apparatus) and the terminal device 20 as a client side (client apparatus). Accordingly, for example, the terminal device 20, which is the client apparatus, can transmit data to the image forming apparatus 10, which is the server apparatus, or conversely, the terminal device 20 can receive data from the image forming apparatus 10, which is the server apparatus. Thus, a file sharing system can be realized in the system 1.

The image forming apparatus 10 may function as a server apparatus or a client apparatus. For example, the image forming apparatus 10 may connect to the file sharing server apparatus 30 as a client apparatus to obtain a file.

### 1.2 Hardware Configuration

### 1.2.1 Image Forming Apparatus

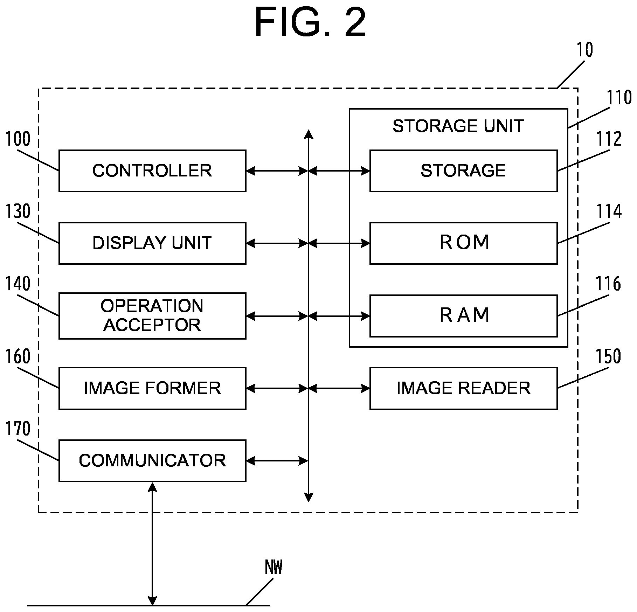

A hardware configuration of the image forming apparatus 10 in the present embodiment will be described with reference to FIG. 2. FIG. 2 is a diagram showing an example of the image forming apparatus 10.

As shown in FIG. 2, the image forming apparatus 10 includes one or more of each of: a controller 100 as a control device; a storage unit 110 (storage 112, ROM (Read only memory) 114, and RAM (Random Access Memory) 116) as a storage device; a display unit 130 as a display device; an operation acceptor 140 as an operation device; an image reader 150 as a reading device; an image former 160 as a printing device; and a communicator 170 as a communication device.

The controller 100 controls the entire image forming apparatus 10. The controller 100 realizes various functions by reading and executing various programs stored in the storage unit 110 (for example, the storage 112 or the ROM 114). The controller 100 may be realized by one or more control devices/arithmetic devices (CPU (Central Processing Unit), SoC (System on a Chip)). Further, the controller 100 may include one or more control circuits.

The storage unit 110 stores programs, data, and the like. The storage unit 110 may include, for example, the storage 112, the ROM 114, the RAM 116, and the like. Further, the storage unit 110 may include, for example, a cache memory or the like included in another functional unit (for example, the controller 100, the communicator 170, or the like).

The storage 112 is a non-volatile storage device capable of storing programs and data. For example, it may include a storage device such as an HDD (Hard Disk Drive) or an SSD (Solid State Drive). Further, the storage 112 may be an external storage device such as a USB memory connectable to the image forming apparatus 10. Further, the storage 112 may be, for example, a storage area on a cloud.

The ROM 114 is a non-volatile memory capable of holding programs and data even if power is turned off.

The RAM 116 is a main memory mainly used by the controller 100 when executing various processes. The RAM 116 is a rewritable memory that temporarily holds programs read from the storage 112 or the ROM 114, and data including results when processing is executed.

The display unit 130 is a display device capable of displaying various types of information and execution screens. The display unit 130 may be, for example, a display device such as a liquid crystal display (LCD), an organic EL (Organic Electro Luminescence) display, or an electrophoretic display. Further, the display unit 130 includes an interface to which a display device can be connected. For example, it may include an external display device connected via HDMI (registered trademark) (High-Definition Multimedia Interface), DVI (Digital Visual Interface), or Display Port.

The operation acceptor 140 is an operation device capable of receiving operation inputs from a user. For example, it may be an operation device such as a touch panel integrated with the display unit 130 or operation buttons. Further, the operation acceptor 140 may be an operation device such as, for example, a keyboard or a mouse. Further, the operation acceptor 140 may include an interface (for example, USB (Universal Serial Bus)) to which an operation device can be connected. For example, the image forming apparatus 10 may be connected to a different operation device (an operation device having a touch panel).

The image reader 150 reads a document (image) and outputs it as image data. The image reader 150 is, for example, a scanner, and may be a reading device using a CCD (Charge Coupled Device) or a CIS (Contact Image Sensor). The image reader 150 may read image data from a recording medium such as a USB memory or an SD card (registered trademark). Further, the image reader 150 may read image data from a terminal device such as a smartphone connected to the image forming apparatus 10 via the communicator 170.

The image former 160 forms an image on, for example, recording paper. The image former 160 includes, for example, an image carrier, forms a toner image on the image carrier, and forms an image by transferring the image on the image carrier onto recording paper. The image former 160 may be configured as an image forming apparatus such as a printer. Further, the image former 160 may electronically form an image as an image file.

The communicator 170 is a communication interface that communicates with other devices. For example, it may be a network interface capable of providing a wired connection such as Ethernet (registered trademark) or a wireless connection such as IEEE802.11a/b/g/n. Further, the communicator 170 may provide a function of becoming a base station for other devices as wireless communication.

Further, in the present embodiment, the communicator 170 can communicate with other devices wirelessly or by wire via the network NW. Further, the communicator 170 may include a communication method for connecting with a terminal device such as a smartphone. For example, the communicator 170 may communicate with a terminal device by a communication method of short-range wireless communication such as Bluetooth (registered trademark) or NFC (Near Field Communication). Further, the communicator 170 may communicate with a terminal device by a wireless LAN communication method such as IEEE802.11a/b/g/n.

### 1.2.2 Terminal Device

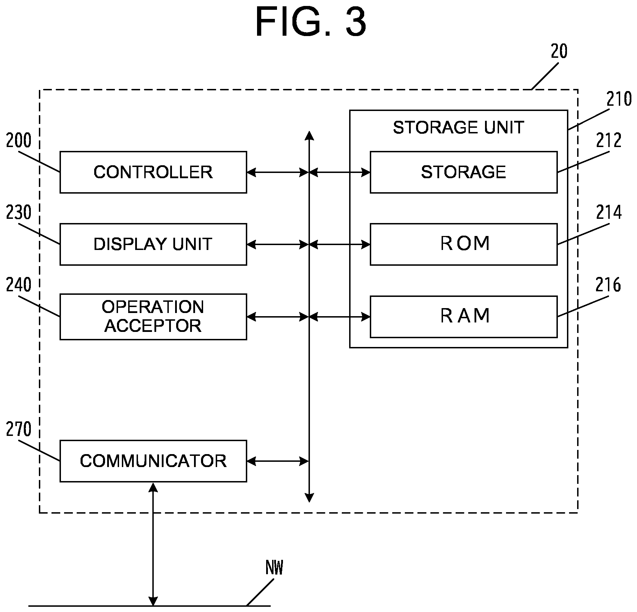

The terminal device 20 is a general processing device, and its configuration will be described with reference to FIG. 3. For example, as shown in FIG. 3, the terminal device 20 includes a controller 200, a storage unit 210 (storage 212, ROM 214, RAM 216), a display unit 230, an operation acceptor 240, and a communicator 270.

Description of each of these functions is omitted because they are configurations of a general device (for example, a control device (CPU) for the controller 200 and a storage device (memory, HDD, SSD, or the like) for the storage unit 210) and can be sufficiently realized by those skilled in the art based on the content described for the image forming apparatus 10.

### 1.3 Software Configuration

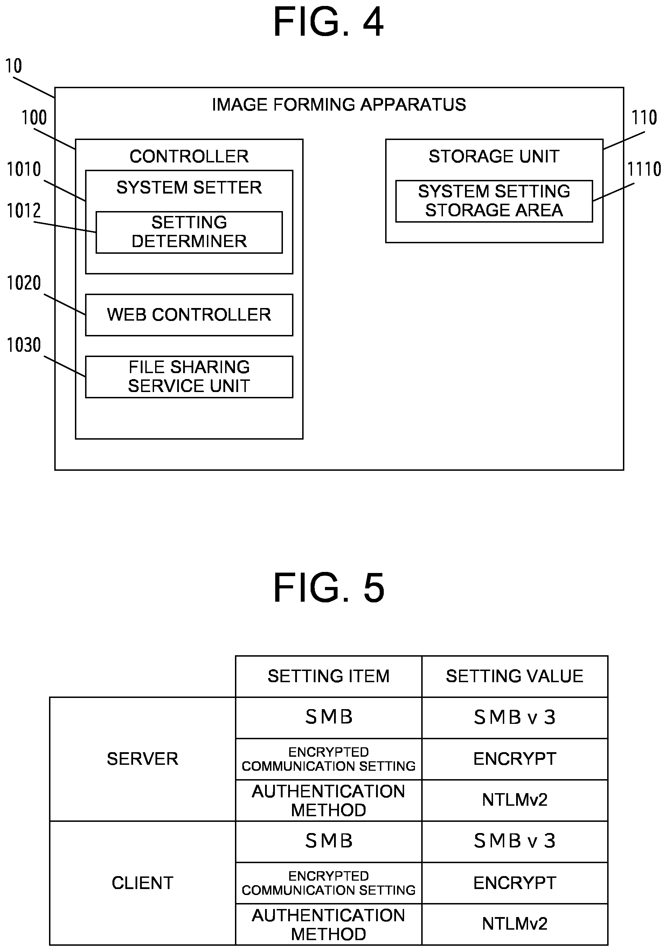

A main software configuration in the image forming apparatus 10 of the system 1 will be described with reference to FIG. 4. The software configuration shown in FIG. 4 mainly describes the configuration necessary for the present embodiment, and other configurations are omitted. For example, the image forming apparatus 10 may further include configurations providing functions necessary for the image forming apparatus 10, such as an image processing unit and a power controller.

The controller 100 of the image forming apparatus 10 functions as each of the following configurations by executing programs (applications) stored in the storage unit 110.

A system setter 1010 performs settings regarding a system for operating the image forming apparatus 10 (hereinafter referred to as "system settings"). The system settings performed by the system setter 1010 are stored in a system setting storage area 1110 of the storage unit 110. At least a part of the system setting functions provided by the system setter 1010 is available to a user, but is preferably used by an administrator.

In the system setting storage area 1110, various settings necessary for operation in the image forming apparatus 10 are stored as system settings. For example, in the present embodiment, information on a version of SMB as a file sharing protocol set in the image forming apparatus 10, an authentication method, and an encrypted communication setting are stored as information stored in the system settings.

FIG. 5 is a diagram showing an example of system settings stored in the system setting storage area 1110. The system settings of the present embodiment can store settings when the image forming apparatus 10 operates as a server apparatus by executing a server function and settings when the image forming apparatus 10 operates as a client apparatus by executing a client function. Further, a protocol (SMB information) of the file sharing service, an encrypted communication setting, and an authentication method are stored as setting items in each of the server apparatus and the client apparatus.

In the system setting storage area 1110, a version is stored as information of the protocol (SMB) as described above. In the present embodiment, one or more of SMBv1, SMBv2, and SMBv3 are stored as setting values.

In the system setting storage area 1110, settings regarding encrypted communication in communication between the image forming apparatus 10 and the terminal device 20 are stored as encrypted communication settings. In the present embodiment, "follow encryption method" or "encrypt" can be stored as setting values of the encrypted communication setting.

Here, "follow encryption method" is a setting that allows encryption. It indicates that the controller 100 allows settings regarding encryption for a user. In this case, encryption is not mandatory in communication between the server apparatus (image forming apparatus 10) and the client apparatus (terminal device 20). For example, when both the client and server are capable of encrypted communication, encrypted communication can be performed.

Further, when "follow encryption method" is set, the setting may be adjusted to partner device. For example, when "follow encryption method" is set and partner device (for example, the terminal device 20 as partner device of the image forming apparatus 10) requests encryption, the image forming apparatus 10 performs encrypted communication. Further, when the partner device does not request encryption, the image forming apparatus 10 does not perform encrypted communication. In this way, when "follow encryption method" is set, the settings regarding encryption of the image forming apparatus 10 are determined according to the behavior of the partner device.

Further, "encrypt" is a setting that forces encryption. When "encrypt" is set, the controller 100 urges a user to always perform encryption settings. In this case, if a device to be a communication partner (partner device) does not support encrypted communication, communication is not performed.

In the system setting storage area 1110, settings regarding an authentication method used in communication between the terminal device 20 and the image forming apparatus 10 are stored as an authentication method. For example, "NTLMv2" and "NTLMv1/LM" can be set as settings for the server apparatus (image forming apparatus 10). Here, NTLM (NT LAN Manager) is an authentication protocol developed by Microsoft (registered trademark). There are several versions of NTLM, and NTLMv1 and NTLMv2 are available in the present embodiment. Further, LM (LAN Manager) is an authentication protocol developed by Microsoft (registered trademark). "NTLMv1/LM" indicates that either authentication method is available. In this way, enabling and disabling of a plurality of methods as one setting item may be set simultaneously.

Here, in the authentication method, "NTLMv2" is an authentication method with a high security degree (high degree of security). Further, "NTLMv1/LM" is an authentication method with a low security degree (low degree of security).

Further, "Kerberos," "NTLMv2," "NTLMv1," and "LM" can be set as authentication methods for the setting of the client apparatus. Among the authentication methods, "LM" has the lowest security degree.

"Kerberos" is an authentication protocol developed by MIT (Massachusetts Institute of Technology). While "NTLMv2" is a method of hashing and transmitting a password, "Kerberos" is a method of sharing a secret key between a client and a server, both of which are Windows (registered trademark) authentication methods.

Further, an authentication method supported by SMB other than the methods described above may be used as a setting item.

A setting determiner 1012 determines input conditions for other setting values according to a certain setting value in the setting items (setting values) in the system settings, and actually reflects the determined setting values and attributes of the setting items. For example, in the present embodiment, input conditions for the setting values of the encrypted communication setting and the authentication method setting are determined by changing setting items of SMB.

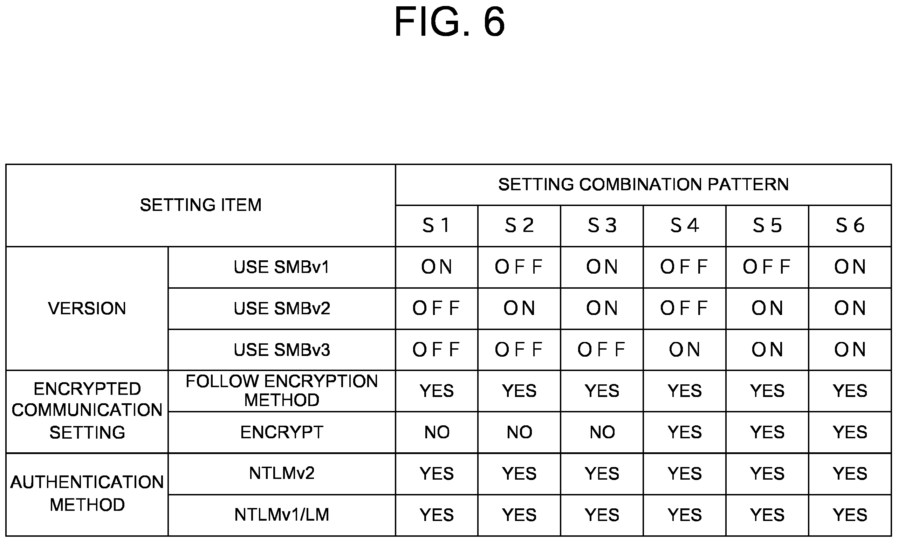

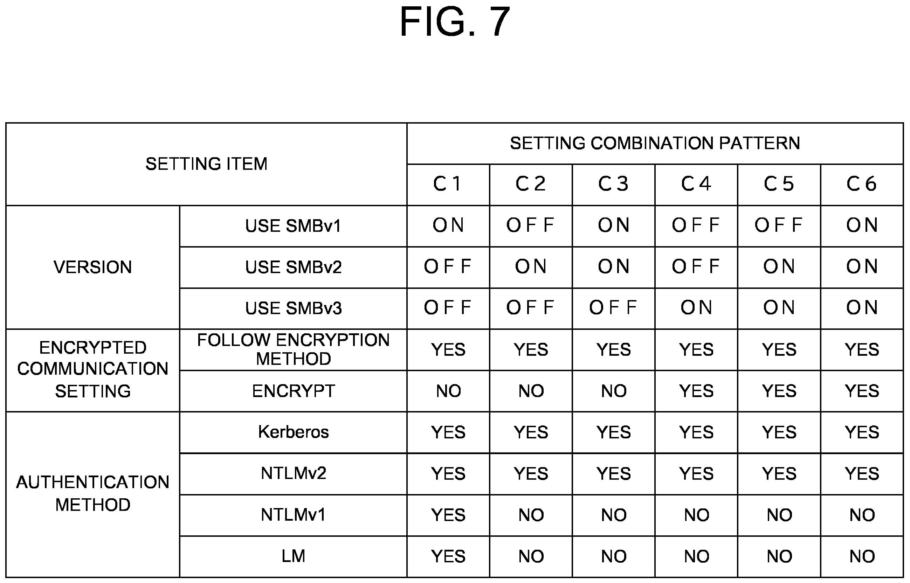

FIG. 6 and FIG. 7 are examples of a determination table for the setting determiner 1012 to determine input conditions for the setting values of the encrypted communication setting and the authentication method setting according to the setting values of SMB. FIG. 6 shows settings for a server function (when the image forming apparatus 10 becomes a server apparatus), and FIG. 7 shows settings for a client function (when the image forming apparatus 10 becomes a client apparatus).

For example, with reference to FIG. 6, when a setting combination pattern is "S1," that is, when it is set to use only SMBv1, the setting determiner 1012 makes it possible to set only "follow encryption method" for the encrypted communication setting. Further, the setting determiner 1012 can set the authentication method such that either "NTLMv2" or "NTLMv1/LM" can be set.

Further, when the setting combination pattern is "S5," that is, when SMBv2 and SMBv3 are set to "ON" (use), the setting determiner 1012 can select "follow encryption method" or "encrypt" for the encrypted communication setting. Further, the setting determiner 1012 can set the authentication method such that either "NTLMv2" or "NTLMv1/LM" can be set.

In the setting of the server function, when SMBv3 is "ON," "follow encryption method" or "encrypt" can be selected for the encrypted communication setting, but when it is "OFF," it is preferable that "encrypt" cannot be selected.

Further, it is preferable not to allow a setting that turns all of SMBv1, SMBv2, and SMBv3 "OFF." Further, it is preferable not to allow a setting that turns only SMBv2 "OFF."

Further, "NTLMv2," which is the authentication method with the highest security, is preferably always "ON." That is, it is preferable that a user cannot disable the use of "NTLMv2" in the authentication method. Accordingly, an authentication method with a high security degree (authentication method with a high security degree) is always enabled, and a user cannot disable it.

Setting of the client function will be described with reference to FIG. 7. When the setting combination pattern is "C1," that is, when it is set to use only SMBv1, the setting determiner 1012 makes it possible to set only "follow encryption method" for the encrypted communication setting. Further, the setting determiner 1012 makes it possible to set any of "Kerberos," "NTLMv2," "NTLMv1," and "LM" for the authentication method.

Further, when the setting combination pattern is "C5," that is, when SMBv2 and SMBv3 are set to "ON" (use), the setting determiner 1012 can select "follow encryption method" or "encrypt" for the encrypted communication setting. Further, the setting determiner 1012 makes it possible to set "Kerberos" and "NTLMv2" for the authentication method, and makes it impossible to set "NTLMv1" and "LM."

In the setting of the client function, when SMBv3 is "ON," "follow encryption method" or "encrypt" can be selected for the encrypted communication setting, but when it is "OFF," it is preferable that "encrypt" cannot be selected.

Further, it is preferable not to allow a setting that turns all of SMBv1, SMBv2, and SMBv3 "OFF." Further, it is preferable not to allow a setting that turns only SMBv2 "OFF."

Further, when only SMBv1 is "ON," it is preferable to make it possible to set "NTLMv1" and "LM." Further, it is preferable not to allow a setting that disables all authentication methods. That is, an authentication method with a low security degree can be set only in the case of SMBv1.

A WEB controller 1020 provides a WEB (World Wide Web) screen. For example, it provides a WEB screen to a terminal device 20 by performing HTTP communication or HTTPS communication with the terminal device 20 that has connected via the communicator 170 and transmitting HTML or XML information. Further, the WEB controller 1020 displays a WEB screen on the display unit 130 in response to a request from the controller 100.

A user can perform settings of the image forming apparatus 10 using the displayed WEB screen as a user interface. Further, the WEB controller 1020 may receive operations on the image forming apparatus 10 from the operation acceptor 140 or remote operations from the terminal device 20 by, for example, providing a processing screen of the image forming apparatus 10.

A file sharing service unit 1030 provides a service for sharing files and the like. The file sharing service provides a service capable of sharing data such as files with other devices, and is sometimes called a data sharing service or a network sharing service. In the present embodiment, the file sharing service provides a service using SMB as a protocol.

Further, the service using SMB in the present embodiment can provide both server/client functions. For example, the file sharing service unit 1030 provides a service to other devices as an SMB server apparatus by executing a server function. When the file sharing service unit 1030 is executing a server function, the image forming apparatus 10 operates as a server apparatus.

Further, the file sharing service unit 1030 can connect to other SMB server apparatuses as an SMB client apparatus by executing a client function. When the file sharing service unit 1030 is executing a client function, the image forming apparatus 10 operates as a client apparatus.

Here, the file sharing service unit 1030 can execute a server function and a client function simultaneously, and in this case, the image forming apparatus 10 operates as a client apparatus while operating as a server apparatus.

Further, in the file sharing service, objects to be shared are not limited to files. A file is an example of an object to be shared, and any data may be used. Further, the objects to be shared may be not only files but also folders, directories, drives, devices, and the like. Further, whether or not to make an object a sharing target may be permitted for each user, for example.

### 1.4 Flow of Processing

The flow of processing in the present embodiment will be described below with reference to the drawings. The following processing will be described mainly focusing on points where the features of the invention of the present disclosure become clear. Although it is preferable that the functional units described in FIG. 4 appropriately execute the following processes, respectively, for convenience of description, the description will be given assuming that the controller 100 executes them.

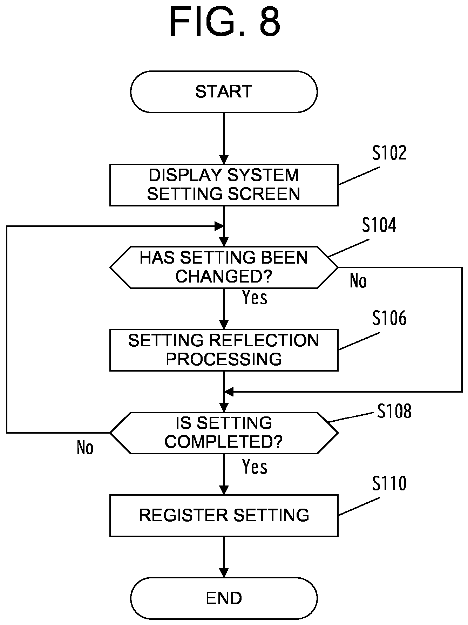

Processing described in FIG. 8 will be explained. The controller 100 displays a system setting screen (S102). When the image forming apparatus 10 is requested to display the system setting screen, the controller 100 displays the system setting screen on the image forming apparatus 10. Further, when the terminal device 20 is requested to display the system setting screen, the controller 100 displays the system setting screen on the terminal device 20. Then, the controller 100 obtains operations regarding settings from the device that displayed the system setting screen and changes setting values. An example in which the system setting screen is displayed on the display unit 130 of the image forming apparatus 10 and operation signals are obtained from the operation acceptor 140 will be described below. The system setting screen may be displayed on the terminal device 20 via the WEB controller 1020 and the communicator 170, and operation signals may be received from the terminal device 20.

In the present embodiment, regarding the controller 100, a case where service settings, especially settings regarding SMB, are changed in the system setting screen will be described. Therefore, the controller 100 displays an SMB setting screen as the system setting screen in S102.

The controller 100 determines whether a setting (setting value) has been changed by a user (S104). Here, when a setting is changed by a user, the controller 100 executes setting reflection processing (S104; Yes → S106). In the setting reflection processing, the setting determiner 1012 determines appropriate attributes and values for other setting items based on a currently set setting value (setting value before change) and a changed setting value (setting value after change), and reflects the determined attributes and values. For example, the setting determiner 1012 sets contents of setting values that can be set in an input field of the encrypted communication setting by switching "ON" and "OFF" setting values of SMBv1, SMBv2, and SMBv3. Further, the setting determiner 1012 changes attributes (for example, changeable, unchangeable) of an input field of the authentication method by switching "ON" and "OFF" setting values of SMBv1, SMBv2, and SMBv3.

When a setting is not changed by a user, the controller 100 determines whether the setting by the user is completed (S104; No → S108). If the setting by the user is not completed, processing from S104 is repeatedly executed until the setting is completed (S108; No → S104). Further, when "registration" is selected by a user and setting is completed, the controller 100 stores current setting values as system settings (S108; Yes → S110).

In the processing described above, assumed processing may be executed together. For example, when a user selects something other than a registration button (for example, a back button, a cancel button), the controller 100 may end the processing without storing changed values in the system settings. Further, when a transition to another function (another screen) is made during system setting, the controller 100 may discard the settings made so far.

Further, when an operation to stop without registration or an operation to execute other processing is performed before setting is completed, the controller 100 may display a confirmation message once, saying "Settings have been changed. Are you sure you want to end without registering?".

### 1.5 Operation Example

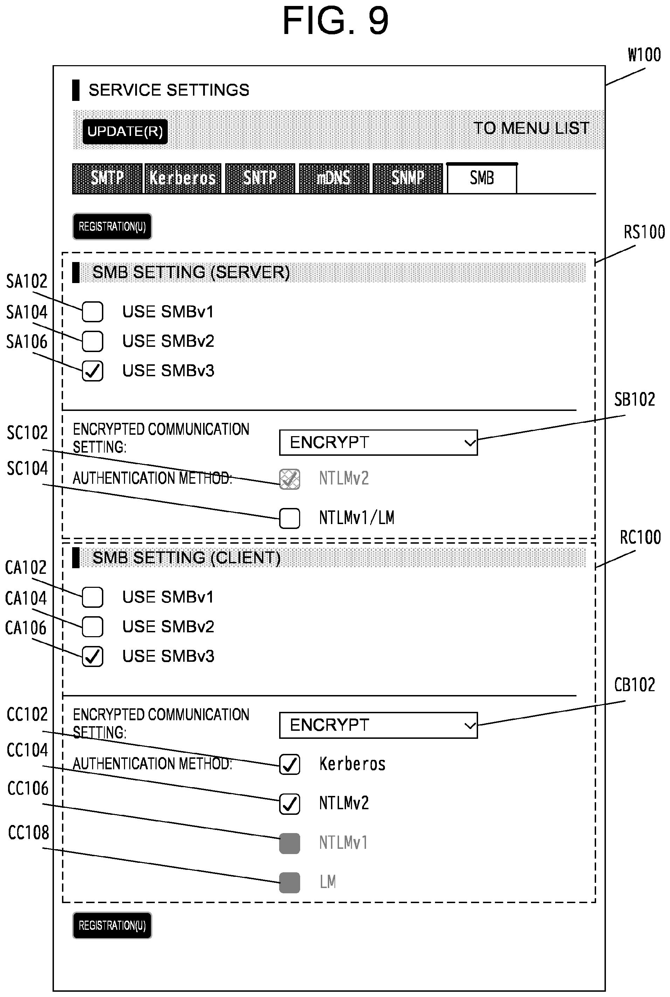

An operation example of the present embodiment will be described below. FIG. 9 is an example of a display screen W100 showing a system setting screen.

The display screen W100 displays, on one screen, an area RS100 for performing SMB setting when the image forming apparatus 10 of the present embodiment operates as a server apparatus and an area RC100 for performing SMB setting when the image forming apparatus 10 operates as a client apparatus. The area RS100 and the area RC100 may be displayed on different screens (separate screens), or a screen displaying the area RS100 and the area RC100 may be switched.

Describing settings of the server apparatus, in the display screen W100, a checkbox SA102 and a checkbox SA104 are "OFF." Further, in the display screen W100, a checkbox SA106 is "ON." That is, SMBv1 and SMBv2 are "OFF," and SMBv3 is "ON."

In this case, since "follow encryption method" and "encrypt" are "∘" for the encrypted communication setting with reference to FIG. 6, the encrypted communication setting can be changed. Therefore, a selection menu SB102 on the display screen W100 is displayed with a changeable attribute (in FIG. 9, "encrypt" is set).

Further, regarding the authentication method, "NTLMv2" and "NTLMv1/LM" are "∘" with reference to FIG. 6. Accordingly, a checkbox SC104 is displayed as selectable (in FIG. 9, it is "OFF" but can be switched to "ON"). As described above, since it is preferable that "NTLMv2" is always "ON," a checkbox SC102 is displayed with an attribute that cannot be changed from "ON." In the display screen W100, it is displayed in grayed out, and a state where setting cannot be changed is shown.

In the present embodiment, when restricting changing of a setting value of a setting item, such as a setting item that cannot be set or a setting value that cannot be changed, an attribute of an input field may be changed, or a display mode may be changed as described above. Although grayed-out display has been described as an example of changing the display mode, it may be displayed in a color different from other input fields (for example, blue, yellow, or the like). Further, a mark or identifier indicating that input is not possible may be displayed superimposed on the input field. Further, changing the display mode can restrict (prohibit) a setting value from being changed by, for example, making the input field non-displayed.

Next, settings of the client apparatus displayed in the area RC100 will be described. In the display screen W100, a checkbox CA102 and a checkbox CA104 are "OFF." Further, in the display screen W100, a checkbox CA106 is "ON." That is, SMBv1 and SMBv2 are "OFF," and SMBv3 is "ON."

In this case, since "follow encryption method" and "encrypt" are "∘" for the encrypted communication setting with reference to FIG. 7, the encrypted communication setting can be changed. Therefore, a selection menu CB102 on the display screen W100 is displayed with a changeable attribute.

Further, regarding the authentication method, "Kerberos" and "NTLMv2" are "∘" with reference to FIG. 7. Accordingly, a checkbox CC102 and a checkbox CC104 are displayed as selectable (in FIG. 9, they are "ON" but can be switched to "OFF"). Further, since "NTLMv1" and "LM" are "×," a checkbox CC106 and a checkbox CC108 are displayed with attributes that are grayed out and cannot be selected. FIG. 9 shows a state where the checkbox CC106 and the checkbox CC108 are "OFF."

The state in FIG. 9 may be an initial state in SMB settings. That is, it shows a state displayed when the image forming apparatus 10 is initially set and a user performs SMB setting for the first time. The initial state may be changed at the time of shipment from a factory, or another state may be used as the initial state. Further, the initial state may be set based on, for example, an initial setting wizard executed when the image forming apparatus 10 is set up.

That is, as a version of SMB, which is a file sharing protocol, 3.0 or higher is set as an initial value. Further, "encrypt" is set as an initial value for the encrypted communication setting. Furthermore, a method with a high security degree is set as an initial value as the authentication method. Accordingly, initial values are set such that encryption is mandatory in communication and authentication between a server and a client is performed by an authentication method with a high security degree. These initial values are applied to both the server apparatus and the client apparatus.

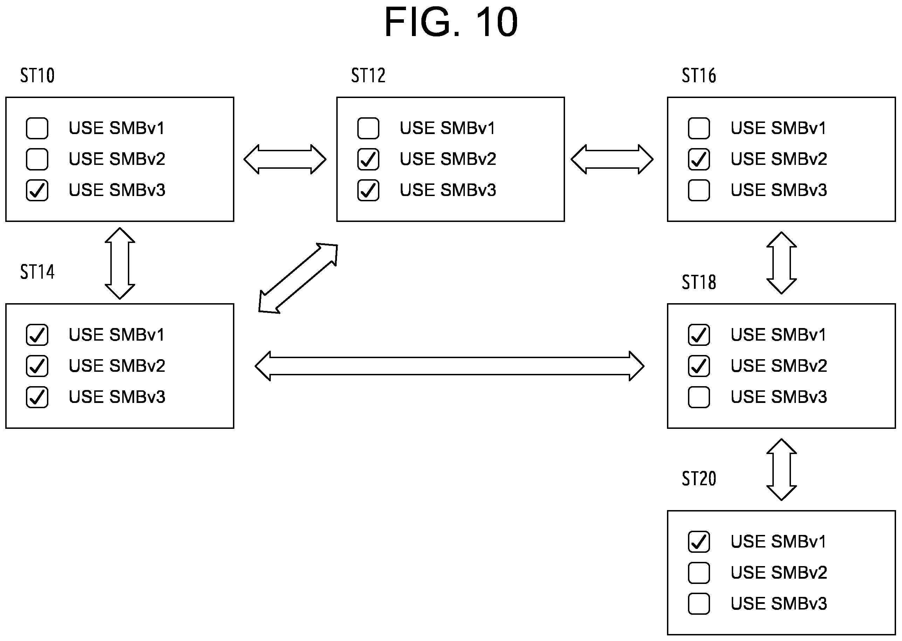

Here, SMB settings (switching between SMBv1, SMBv2, and SMBv3) may transition in states as shown in FIG. 10, for example.

First, initial setting is a state ST10. In the state ST10, only SMBv3 is "ON." In the state ST10, when a user turns SMBv2 "ON," the state transitions from ST10 to a state ST12. Further, when a user turns SMBv1 "ON" in the state ST10, SMBv2 also becomes "ON," and the state transitions from ST10 to a state ST14. This is because, as described above, it is preferable not to allow a state where only SMBv2 is "OFF."

Next, in the state ST12, when a user turns SMBv2 "OFF," the state transitions from ST12 back to the state ST10. Hereinafter, even if not particularly described, a transition back to an original state occurs by performing checking opposite to an operation when a state transitions.

In the state ST12, when a user turns SMBv3 "OFF," the state transitions from ST12 to a state ST16. In this case, only SMBv2 is "ON." Further, in the state ST12, when a user turns SMBv1 "ON," the state transitions from ST12 to the state ST14.

In the state ST16, when a user turns SMBv1 "ON," the state transitions from ST16 to a state ST18. Further, in the state ST14, when a user turns SMBv3 "OFF," the state transitions from ST14 to the state ST18. In the state ST18, SMBv1 and SMBv2 are "ON."

In the state ST18, when a user turns SMBv2 "OFF," the state transitions from ST18 to a state ST20.

Although the state ST10 has been described as the initial state, the state ST14 may be used as the initial state, for example.

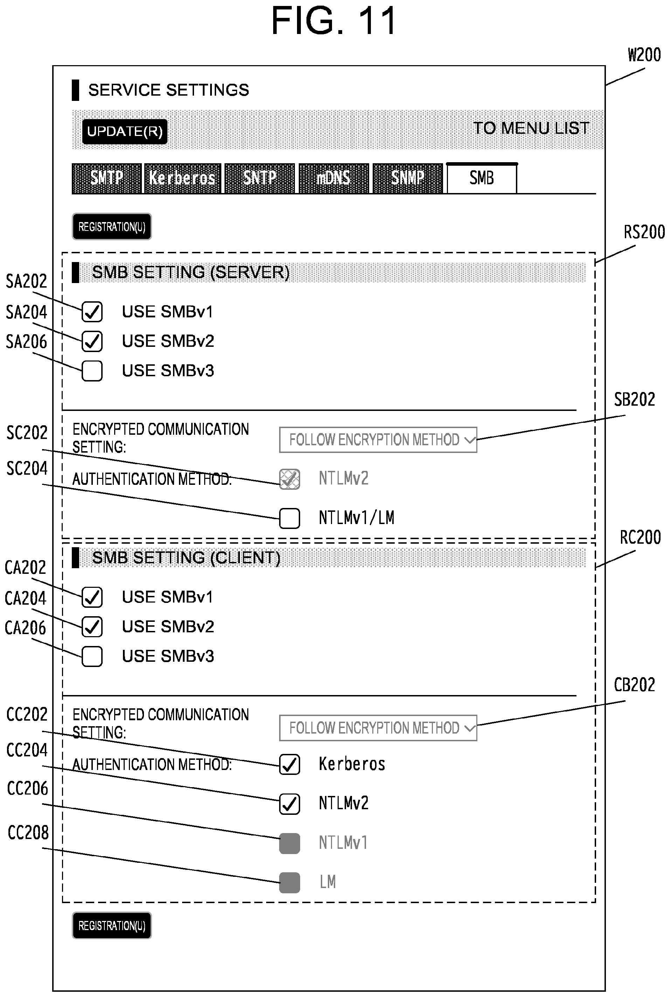

FIG. 11 is an example of a display screen W200 showing a system setting screen in which a user has changed setting values in the display screen W100 of FIG. 9. In settings for operating as a server apparatus (area RS200), a user has switched SMB settings for operating as a server apparatus such that SMBv1 and SMBv2 are "ON" (checkbox SA202 "ON," checkbox SA204 "ON," checkbox SA206 "OFF").

In this case, with reference to FIG. 6, only "follow encryption method" is "∘" for the encrypted communication setting. Therefore, the controller 100 changes a selection menu SB202 to an unchangeable attribute. Accordingly, the encrypted communication setting is displayed in grayed out, and a state where the setting value is "follow encryption method" and cannot be changed is shown.

Similarly, a user has switched SMB settings of the client apparatus such that SMBv1 and SMBv2 are "ON" (checkbox CA202 "ON," checkbox CA204 "ON," checkbox CA206 "OFF").

In this case, with reference to FIG. 7, only "follow encryption method" is "ON" for the encrypted communication setting. Therefore, the controller 100 changes a selection menu CB202 to an unchangeable attribute. Accordingly, the encrypted communication setting is displayed in grayed out, and a state where the setting value is "follow encryption method" and cannot be changed is shown.

Checkboxes that are not changed in this state (checkbox SC202, checkbox SC204, checkbox CC202, checkbox CC204, checkbox CC206, and checkbox CC208) are displayed without change.

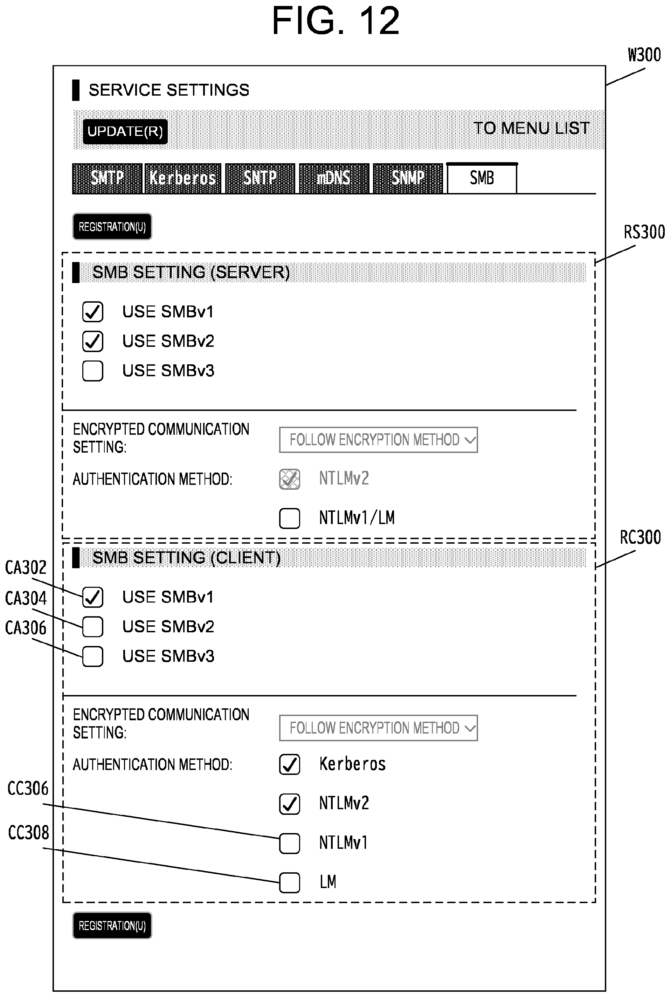

Furthermore, FIG. 12 is an example of a display screen W300 showing a system setting screen when a user switches SMB settings of the client apparatus such that only SMBv1 is "ON" in the display screen W200 of FIG. 11. SMBv1 is "ON," but SMBv2 and SMBv3 are "OFF" (checkbox CA302 "ON," checkbox CA304 "OFF," checkbox CA306 "OFF").

With reference to FIG. 7, the encrypted communication setting does not change, but "NTLMv1" and "LM" become "∘" for the authentication method in addition to "Kerberos" and "NTLMv2." Accordingly, the display is updated to a state where a checkbox CC306 and a checkbox CC308 are selectable. That is, grayed-out display is canceled for these two authentication methods.

### 1.6 Effects

As described above, according to the file sharing apparatus of the present embodiment, related setting items (for example, an authentication method and an encryption setting) can be appropriately combined according to a type of protocol (for example, a version) to be used. In particular, in the file sharing apparatus of the present embodiment, when a type of protocol to be used is selected, setting items that cannot be set become unselectable, or correct setting values are set in advance. That is, it is possible to prevent a user from setting a combination that cannot be set for a type of protocol (version information and the like) and setting items (an authentication method, an encryption setting, and the like).

Further, in the file sharing apparatus of the present disclosure, an authentication method and presence or absence of encryption that can be set can be dynamically switched in conjunction with an SMB version to be enabled in a setting screen.

Accordingly, for example, constraints in terms of implementation or protocols of a combination of an SMB version, an authentication method, and an encryption setting can be avoided. For example, while encrypted communication can be forced in SMBv3, encrypted communication cannot be forced in SMBv1 and SMBv2. In such a case, by automatically making setting fields unselectable, it is possible to prevent a user from setting combinations that cannot be set.

Although SMBv1, SMBv2, and SMBv3 have been described as file sharing protocols in the embodiments described above, for example, a version may be set by a numerical value, or finer settings may be performed by setting a version by a numerical value.

Although SMB is used as an example of a file sharing service (protocol) in the embodiments described above, the present invention is not limited thereto. For example, the present invention can be applied to file sharing services such as NFS (Network File System), AFP (Apple Filing Protocol), and CIFS (Common Internet File System). For example, setting values and attributes of settings may be associated among file sharing service versions such as NFSv2/NFSv3/NFSv4 and AFP2.0/AFP3.0/AFP3.1/AFP3.5/AFP3.6, encrypted communication settings, and authentication methods.

### 2. Second Embodiment

Next, a second embodiment will be described. The first embodiment described a case where an authentication method and presence or absence of encryption that can be set are dynamically switched in conjunction with a version number of a file sharing service. The second embodiment describes a case of working in conjunction with other information.

The second embodiment has the same hardware and software configurations as the first embodiment. The present embodiment will be described mainly focusing on points different from the first embodiment.

For example, although an SMB version is stored in FIG. 6 of the first embodiment, an authentication method and the like may be switched based on other information.

### (1) Case of SMTP Setting

For example, instead of a version, setting of an authentication method may be switched based on setting of a port number. For example, "25" and "587" can be set as port numbers. Then, when the port number "25" is set, "no authentication" and "with authentication" can be selected as the authentication method, but when the port number "587" is set, only "with authentication" may be selectable as the authentication method. Further, an encryption method and a protocol to be used may be set together.

Accordingly, a user can perform settings by combining appropriate setting values corresponding to a port number.

### (2) File Transfer Service

For example, instead of a version, an authentication method and an encrypted communication setting may be switched based on a protocol. As the protocol, for example, "FTP (File Transfer Protocol)" may be used as a file transfer service instead of a file sharing service. At this time, a file transfer service is used, but "SFTP (SSH File Transfer Protocol)" and "FTPS (File Transfer Protocol over SSL/TLS)" in addition to "FTP" may be settable as the protocol to be used. Further, WebDAV (Web-based Distributed Authoring and Versioning, HTTP (Hypertext Transfer Protocol)) may be used as the file transfer service.

### (3) Case of Using External Service

For example, instead of a version, setting of an authentication method may be switched based on an external service to be used. For example, when an A service is used, "password authentication," "SMS authentication," and "OAuth authentication" can be selected, but when a B service is used, only "OAuth authentication" can be selected.

Accordingly, a user can perform settings by combining available authentication methods corresponding to an external service.

### 3. Modifications

The present disclosure is not limited to the embodiments described above, and various changes can be made. That is, embodiments obtained by combining technical means appropriately changed within a range not departing from the spirit of the present disclosure are also included in the technical scope.

Here, an initial value of a version of SMB, which is a file sharing protocol, and an initial value of an encrypted communication setting may be controlled according to whether or not a destination (target area) of the file sharing apparatus is a specific destination such as a country or region under a security enhancement law system.

That is, when a destination (target area) of the file sharing apparatus is a specific destination such as a country or region under a security enhancement law system, in SMB settings, 3.0 or higher is set as an initial value of a version of SMB, which is a file sharing protocol, and "encrypt" is set as an initial value of an encrypted communication setting, so that a degree of security may be increased.

Further, when a destination (target area) of the file sharing apparatus is not a specific destination such as a country or region under a security enhancement law system, settings with a low security degree, such as a setting to turn on all versions as an initial value of a version of SMB, which is a file sharing protocol, and a setting not to make encrypted communication setting mandatory, may be allowed.

Further, when the file sharing apparatus is in a specific security state (for example, a higher security state than usual), in SMB settings, 3.0 or higher is set as an initial value of a version of SMB, which is a file sharing protocol, and "encrypt" is set as an initial value of an encrypted communication setting, so that a degree of security may be increased, regardless of whether or not a destination (target area) of the file sharing apparatus is a specific destination such as a country or region under a security enhancement law system. Further, these initial values may be displayed fixedly (in a state where change to other setting values is not possible).

This is because, with enactment of laws for strengthening security such as the Cyber Resilience Act, RED (EU Radio Equipment Directive 2014/53/EU), and the IoT Cybersecurity Improvement Act, further security enhancement measures for purposes of protection of information in a processing apparatus, defense against attacks from outside, and the like may be required for a processing apparatus to be put into a market of a region or country subject to these regulations. In these cases, by applying the file sharing apparatus, the file sharing method, and the like of the present disclosure, it is possible to provide an appropriate apparatus.

In the embodiments described above, an image forming apparatus has been described as an example of a file sharing apparatus. However, the file sharing apparatus can be applied to other devices. For example, as an example of the file sharing apparatus, any apparatus having a WEB server function may be used, and an information processing apparatus such as a computer or a server apparatus, an information processing apparatus such as a smartphone or a tablet, or a video equipment such as a camera may be used. Further, household appliances (for example, an air conditioner, a refrigerator, a television, or the like) equipped with an IoT function may be used. Further, the device is not limited to a stationary device, and may be a portable device or an in-vehicle device, for example. For example, a device such as a car navigation system may be used as an in-vehicle device.

Although each embodiment has been described separately in the embodiments described above for convenience of description, they can be executed in combination within a possible range. Further, the applicant intends to acquire rights for any of the techniques described in the specification in an amendment, a divisional application, or the like.

Programs operating in each device in each embodiment are programs that control a CPU or the like (programs that cause a computer to function) so as to realize the functions of the embodiments described above. Information handled by these devices is temporarily stored in a temporary storage device (for example, a RAM) during processing, then stored in storage devices such as various ROMs and HDDs, and read out, modified, or written by the CPU as necessary.

As a recording medium for storing programs, any of semiconductor media (for example, a ROM, a non-volatile memory card, or the like), optical recording media/magneto-optical recording media (for example, DVD (Digital Versatile Disc), CD (Compact Disc), BD (Blu-ray (registered trademark) Disc), or the like), magnetic recording media (for example, a magnetic tape, a flexible disk, or the like), and the like may be used.

When the programs are distributed in a market, they can be stored in a portable recording medium and distributed, or can be transferred to a server computer connected via a network such as the Internet. In this case, it goes without saying that a storage device of the server apparatus is also included in the present disclosure.

Further, the data described above may not be stored in a device but may be stored in an external device and called appropriately. For example, data may be stored in a NAS (Network Attached Storage) or on a cloud.

The scope of the present disclosure is not limited by configurations explicitly described in the specification, and combinations of techniques disclosed in the specification are also included in the scope. Although configurations for which a patent is sought in the present disclosure are described in the appended claims, there is no intention to exclude them from the technical scope because they are not described in the claims.

In the specification described above, descriptions such as "in a case of" and "when" are described as examples and do not limit a configuration to described content. Regarding configurations that are not these cases or times, ranges that are obvious to those skilled in the art are also disclosed, and the applicant intends to acquire rights for them.

Regarding descriptions accompanied by an order of processing and data flows described in the specification, the order is not limited to the described order. For example, configurations in which some parts of processing are deleted or the order is changed are also disclosed, and the applicant intends to acquire rights for them.

Although it has been described that functions described in the embodiments are executed by respective devices, they may be realized by one device or an external server may be used.

Each functional block or various features of the devices used in the embodiments described above can be implemented or executed by an electric circuit, for example, an integrated circuit or a plurality of integrated circuits. An electric circuit designed to execute the functions described in the specification may include a general-purpose processor, a digital signal processor (DSP), an application-specific integrated circuit (ASIC), a field-programmable gate array (FPGA), or other programmable logic devices, discrete gates or transistor logic, discrete hardware components, or a combination thereof. A general-purpose processor may be a microprocessor, a conventional processor, a controller, a microcontroller, or a state machine. The electric circuit described above may include a digital circuit or an analog circuit. Further, when a technology of integrated circuitry that replaces current integrated circuits appears due to progress of semiconductor technology, one or more aspects of the present disclosure can use a new integrated circuit based on the technology.

### Description of Reference Numerals

1: system
10: image forming apparatus
100: controller
110: storage unit
112: storage
114: ROM
116: RAM
130: display unit
140: operation acceptor
150: image reader
160: image former
170: communicator
20: terminal device
200: controller
210: storage unit

## Claims

1. A file sharing apparatus (10) comprising:
a communicator (170) that communicates with a client; and
one or more controllers (100);
wherein the one or more controllers (100) provide a file sharing service to the client, and are capable of setting a version of a protocol used in the file sharing service, an authentication method in the communication, and an encrypted communication setting, and when the version of the protocol is set, the one or more controllers (100) switch settings to the authentication method and the encrypted communication setting available in the set version.

2. The file sharing apparatus (10) according to claim 1, wherein the protocol used in the file sharing service is Server Message Block (SMB).

3. The file sharing apparatus (10) according to claim 2, wherein the one or more controllers (100) set an initial value of the version to 3.0 or higher, and set the encrypted communication setting to a setting that makes encryption mandatory corresponding to the version.

4. The file sharing apparatus (10) according to claim 3, wherein the one or more controllers (100) restrict changing the authentication method to an authentication method with a low security degree.

5. The file sharing apparatus (10) according to claim 3, wherein the one or more controllers (100) are capable of changing the encrypted communication setting to a setting in which encryption is not mandatory.

6. The file sharing apparatus (10) according to claim 3, wherein, when a version lower than 3.0 is set as the version, the one or more controllers (100) restrict changing the encrypted communication setting to a setting that makes encryption mandatory.

7. The file sharing apparatus (10) according to claim 3, wherein, when 1.0 is set as the version, the one or more controllers (100) are capable of changing the authentication method to an authentication method with a low security degree.

8. The file sharing apparatus (10) according to claim 1,
wherein the file sharing service is capable of providing a server function and a client function, and
the one or more controllers (100) are capable of setting, as the version of the protocol used in the file sharing service, a version of a protocol used in the server function and a version of a protocol used in the client function, and display a setting screen capable of setting both a setting of the server function and a setting of the client function, on one screen.

9. The file sharing apparatus (10) according to claim 8, wherein, in the authentication method in the server function, the one or more controllers (100) set an authentication method with a high security degree to be always enabled.

10. A data sharing method that performs communication between an image forming apparatus (10) and a terminal device (20) and shares data using a file sharing protocol, the method comprising:
enabling setting of a version of the file sharing protocol, an authentication method used in the communication, and an encrypted communication setting of the communication; and
when the version of the file sharing protocol is set, switching to the authentication method and the encrypted communication setting available in the set version.
